# EUROPEAN PATENT SPECIFICATION

(11) **EP 3 063 242 B1**
(45) Date of publication and mention of the grant of the patent: **10.01.2018**
(21) Application number: 14789299.6
(22) Date of filing: 27.10.2014
(51) Int. Cl.: C09D 163/00, C08K 5/54, C08K 7/14

(54) **POWDER COATING COMPOSITION**
PULVERBESCHICHTUNGSZUSAMMENSETZUNG
COMPOSITION DE REVÊTEMENT PAR PULVÉRISATION

(30) Priority: 30.10.2013 EP 13190783
(43) Date of publication of application: 07.09.2016
(73) Proprietor: Akzo Nobel Coatings International B.V., 6824 BM Arnhem (NL)
(72) Inventor: PARK, Taesoon, Ansan-si Gyeonggi-do 425-873 (KR); HYUN, DaeHwa, Anyang-si Gyeonggi-do (KR); KIM, SeokJoo, Seoul (KR)
(74) Representative: Akzo Nobel IP Department
(86) International application number: PCT/EP2014/072991
(87) International publication number: WO 2015/063024

(56) References cited:
- EP-A2- 0 230 145

## Description

This invention relates to a powder coating composition. More specifically, the present invention relates to powder coating compositions suitable for coating metal substrates to provide corrosion and chip resistance.

Steel coil springs, and in particular high tensile steel coil springs, in the wheel assemblies of automobiles and other vehicles are subjected to very demanding conditions. High tensile steel coil springs are scratch and notch sensitive, so they require protection from impact damage caused by flying stones and gravel encountered during driving on paved or unpaved roads. Accordingly, there is a need for powder compositions suitable for coating a substrate, particularly a steel substrate such as, for example, high tensile steel wherein a coating formed from the composition exhibits a high level of chip resistance as well as corrosion resistance.

EP 230145 discloses an epoxy resin powder coating composition. These compositions are said to achieve a high impact resistance and excellent protection against corrosion. Howevr, we found that these coating compositions do not meet the scab corrosion test requirements.

US 6,677,032 discloses a dual layer coating including a zinc-rich, toughened epoxy basecoat which provides corrosion-resistance and a zinc-free topcoat of the same thermoset epoxy resin which provides chip-resistance. While the toughened coatings for high tensile steel could be processed with a single heat cycle, the thickness of the topcoats disclosed therein added to the cost of a coating that would meet an automotive OEM Chip Resistant Coating Test.

US 2009/0110934 also discloses a topcoat including powder coatings formed from one or more wax and a resin component of one or more toughened epoxy resin and dual coatings of toughened epoxy powder basecoats and topcoats.

The invention provides chip resistant powder coatings for steel, especially high tensile steel, while providing thinner and/or more economical topcoats.

US 7,244,780 discloses powder coating compositions that comprise a film-forming polymer, a pigment such as aluminum flake providing a metallic effect and a stabilizing additive that inhibits degradation of the metallic pigment.

US 7,018,716 discloses corrosion-and chip-resistant coatings for high tensile steel components, such as automotive coil springs, formed from a coating powder composition of "toughened epoxy resin". In a single coat embodiment, the entire coating is loaded with at least 75 phr zinc powder. In a dual coat embodiment, an inner coat is loaded with at least 75 phr zinc and an outer, zinc-free coating is reinforced by the addition of fibers and/or by a foaming agent which renders it porous.

Finally, US 2010/0256282 discloses a powder composition comprising a resin and from 5% to 70%, by weight based on powder composition weight, of a corrosion-inhibiting pigment, wherein the composition is substantially free from pigment providing a metallic effect.

Accordingly, there is still a need for a powder coating composition suitable for coating a substrate, particularly a steel substrate such as, for example, high tensile steel wherein a single coating layer formed from the composition exhibits a high level of chip resistance and corrosion resistance without relying on the use of high levels of zinc metal (e.g. greater than 25-40 phr) or the use of corrosion inhibiting pigments. Moreover, the coating should be suitable for providing the high level of chip resistance and corrosion resistance in a single layer coating.

In an aspect, the present invention relates to a powder coating composition. The powder coating composition comprises at least one epoxy resin, at least one adhesion promoter and at least one filler.

In another aspect, the present invention relates to a method for coating a steel substrate. The method comprises applying a single coat powder coating system comprising a powder coating composition comprising at least one epoxy resin, at least one adhesion promoter, and at least one filler. The method further includes heating the powder coating composition to an effective temperature and an effective time sufficient to fuse the composition.

In yet another aspect, the present invention relates to a steel substrate coated with a single layer powder coating system. The powder coating system comprises a powder coating composition comprising at least one epoxy resin, at least one adhesion promoter, and at least one filler.
The present invention generally relates to powder coating compositions comprising at least one resin, at least one adhesion promoter and at least one filler, methods of coating substrates, such as steel substrates, and substrates coated with the coating composition. The powder coating compositions exhibit high levels of chip resistance and corrosion resistance without requiring high levels of zinc metal or the use of corrosion inhibiting pigments, and can provide such benefits in a single layer coating. Accordingly, the powder coating compositions of the present invention provide as comparable or better corrosion and/or chip resistance relative to conventional dual coat powder coating systems and conventional power coating systems that rely on the use of corrosion inhibiting pigments.

The powder composition of the present invention includes at least one resin, i.e., a polymeric composition suitable for powder coatings such as, for example, thermoplastic or thermoset resins, particularly an epoxy resin. The epoxy resin may be chosen from a variety of epoxy resins useful for powder coatings, such as, without limitation, those produced by the reaction of epichlorohydrin or polyglycidyl ether and an aromatic polyol such as, without limitation, bisphenol, e.g., bisphenol A. In an embodiment, the epoxy resin typically has epoxy functionality greater than 1.0 and more preferably greater than 1.9. Generally, the epoxy equivalent weight should be at least about 170 g/eq, but lower values may be acceptable in some cases. Preferably the epoxy equivalent weight is less than about 2300 g/eq, and more preferably greater than about 400 g/eq and less than about 1500 g/eq, and more preferably greater than about 700 g/eq and less than about 1500 g/eq. Such epoxy resins may be produced, for example, by an etherificiation reaction between an aromatic or aliphatic polyol and epichlorohydrin or dichlorohydrin in the presence of an alkali such as caustic soda. The aromatic polyol may be, for example, bis(4-hydroxyphenyl)-2,2-propane (i. e. bisphenol A), bis(4-hydroxyphenyl)-1,1-ethane, bis(4-hydroxyphenyl)-1, 1-isobutane, bis(4-hydroxy-t-butylphenyl)-2,2-propane, bis(2-hydroxynaphthyl)methane, 4,4'-dihdyroxybenzophenone or 1,5-pentanediol, 1, 6-hexanediol, diethylene glycol, triethylene glycol, polyethylene glycol, polypropylene glycol or dipropylene glycol, for example diglycidyl ethers or condensed glycidyl ethers of such diols, can be used. Other oxirane group-containing polymers that can be used as the epoxy resin in hybrid powder coating compositions according to this invention include polyglycidyl-functional acrylic polymers or epoxy novolak resins. Preferred epoxy resins for use in the present invention are those based on bisphenol A. In an embodiment of the invention, the powder coating compositions can include one or more epoxy resins.

Epoxy resins suitable for use in the present invention may be obtained from SIR Industriale, Kukdo, Dow, Huntsman, Cheil Ciba-Geigy, Kumho P&B Chemicals, Mitsui Chemicals, Anhui Hengyuan Chemicals Company Co. Ltd, Chang Chun Plastics, CVC Specialty Chemicals, Estron Chemical and Nan Ya Plastics and can be identified by their EEW range. Some epoxy resins may have overlapping EEW ranges but are nonetheless distinguishable. The epoxy resin may be, for non-limiting example, a bisphenol A epoxy resin having an EEW of about 730 g/eq to about 820 g/eq, a bisphenol A epoxy resin having an EEW of about 1250 g/eq to about 1400 g/eq, a bisphenol A epoxy resin having an EEW of about 780 g/eq to about 900 g/eq, a bisphenol A epoxy resin having an EEW of about 750 g/eq to about 850 g/eq, a bisphenol A epoxy resin having an EEW of about 730 g/eq to about 840 g/eq, a bisphenol A epoxy resin having an EEW of about 1150 g/eq to about 1300 g/eq, or a combination thereof. Such epoxy resins are available from The Dow Chemical Company as D.E.R.™ 663U, D.E.R.™ 6155, D.E.R.™ 6330-A10, and D.E.R.™ 672U and from The Kukdo Chemical Company as EPOKUKDO KD213 and KD214M, respectively. Combinations of such epoxy resins may also be used.

As used herein and further illustrated in the examples, the term "an effective amount" of an epoxy resin, an "effective amount" of a polyhydroxyl functional phenolic curing agent, and an "effective amount" of a filler material respectively describe amounts of epoxy resin, polyhydroxyl functional phenolic curing agent and filler material that contribute to a coating which satisfies industrially acceptable corrosion resistance standards for the intended application, such as in the case of high tensile suspension springs GM specification GMW14656.

Other epoxy resins for use in the powder coating composition include, for non-limiting example, epoxidized phenol-novolac resins with a softening point between about 80°C and about 125°C. In some embodiments, the softening point is between about 90°C and about 115°C. In some embodiments, a diglycidyl ether of bisphenol-A (DGEBA) novolac modified epoxy resin is used.

In some embodiments of the invention, the bisphenol A epoxy resin is obtained, for non-limiting example, from condensation polymerization of bisphenol A with epichlorohydrin. Other resin chemistries can be employed such as, without limitation, a bisphenol A epoxy resin cured with dicyandiamine or co-reacted with a carboxy functional polyester (hybrid).

The amount of the epoxy resin or combination of epoxy resins in the powder coating composition may vary in relation to the amounts of the additives and fillers. For non-limiting example, per the phr (parts per hundred resin) formula convention, the resin and curing agent total is set at 100 parts. The percent of the total epoxy resin in the formulation then varies as a function of additives and filler phr level. In some embodiments, the epoxy resin or combination of epoxy resins is present in an amount from about 35 to about 95 parts of the available 100 parts. Alternatively, in an embodiment, the epoxy resin or combination of epoxy resins is present in an amount greater than about 10 wt%, more preferably greater than about 20 wt%, even more preferably greater than about 30 wt% and most preferable greater than about 40 wt%, and less than about 75 wt%, more preferably less than about 60 wt% and most preferably less than about 55 wt%, based on total weight of the powder coating composition.

Epoxy resin may be toughened by the use of additives or co-reactants such as, for example, as impact modifiers, flexibilizing agents, plasticizers and tougheners. These may include:
- elastomeric modifications, either within the base polymer, reacted into the coating composition through cross-linking, or as unreacted additives, such as, for example, CTBN rubber, butadiene/styrene, nitrile, neoprene, acrylic, butyl, ethylene/propylene/diene, polysulfide, polyisoprene, silicone, and urethane rubber;
- random or block copolymer addition which offer some degree of internal plastication and may be exemplified by the FORTEGA™ products (Dow Chemical Co.);
- addition of plasticizers such as epoxidized soybean oil;
- -crosslinked or noncrosslinked core/shell resins with various compositions such as epoxy, acrylic, polyurethane representing either the core or the shell portion.

Further, tougheners may include hollow spherical particle including polymeric or glass beads. Still further, discrete microdomains of any of the above may be present and may contribute to chip resistance.

In one embodiment the epoxy resin, preferably a bisphenol A resin, is adducted to an elastomer having a Tg of -30° C. or below, preferably -40° C. or below. The preferred elastomer is CTBN rubber. Such epoxy/CTBN rubber adducts are described, for example, in U.K. Patent Specification 1,407,851 (C. G. Taylor) published Sep. 24, 1975 and Powder Coatings, 184 "Elastomer-Modified Epoxy Powder Coatings: a Review", Apr. 13, 1994, No. 4347. To provide the toughening (flexibilizing) for cold-temperature chip resistance, the CTBN component should be present at least 5 wt % of the total of the CTBN and the epoxy components. Above about 25 wt % CTBN, no further benefit is realized and it is not desired to exceed 25 wt % lest there be insufficient epoxy component for a good cure. The fact that the elastomer component is chemically bound to the epoxy component, i.e., by esterification reaction of the carboxyl groups of the CTBN with epoxy groups, ensures that a complete phase separation does not occur during fusion and curing of the coating powder. However, there are microdomains of epoxy and rubber. Examples of a suitable elastomer-modified epoxy resin is a rubber modified bisphenol-A type available from The Kukdo Chemical Company as EPOKUKDO KR-100, KR-102, KR 104L, KR170, KR-207 and KR-450. Other suitable elastomer-modified epoxy resins are available from Nanya, The Dow Chemical Company as FORTEGRA 201 toughened epoxy resin, EPON as EPON 58005 CTBN modified DGEBPA, EPON 58006 CTBN modified DGEBPA, EPON 58120 CTBN modified DGEBPA, EPON 58901 CTBN modified DGEBPA, Huntsman as Araldite® LT 1108, epoxy terminated, bisphenol F epoxy / CTBN resin adduct, Araldite® LT 1115 epoxy terminated, bisphenol F epoxy / CTBN resin adduct, Araldite® LT 1146 epoxy terminated, bisphenol F epoxy / CTBN resin adduct, Araldite® LT 1134 epoxy terminated, bisphenol F epoxy / CTBN resin adduct, Araldite® LT 1522 solid epoxy terminated, bisphenol F epoxy / CTBN resin adduct, or other similar resins available from Kumho P&P, Asahi Kasei, Epoxital srl, Chang Chun Plastics (CCP), and Bakelite.

In an alternative embodiment, a core/shell resin is used in which an acrylic rubber resin forms the core and the epoxy resin, preferably a bisphenol A epoxy resin, forms the shell. Again, chemical bonding between carboxylic functionality of the acrylic rubber resin of the core and the epoxy resin of the shell prevents phase separation during fusion and curing of the coating powder formed using the core/shell resin. Such acrylic rubber modified epoxies are described, for example, in Polymer Reprints,32(3), pp. 358-9 by H-J Sue and E. I. Garcia-Melfin.

In an embodiment, the powder coating composition further includes an effective amount of an elastomer-modified epoxy resin having an EEW of about 700 g/eq to about 1600 g/eq, and in another embodiment, 1000 g/eq to about 1600 g/eq. In an embodiment, the elastomer-modified epoxy resin may be a bisphenol A epoxy resin which has been adducted with CTBN (carboxyl terminated butadiene acrylonitrile) rubber producing a composite resin having an EEW of about 900 g/eq to about 1500 g/eq or about 1000 g/eq to about 1300 g/eq. In some embodiments, the Tg is about 30°C to about 50°C. Tg is the Glass Transition Temperature which is the critical temperature at which a non-crystalline material changes its behavior from a 'glassy' to 'rubbery' state. 'Glassy' in this context means hard and brittle (and therefore relatively easy to break), while 'rubbery' means elastic and flexible.

The amount of the elastomer-modified epoxy resin or combination of elastomer-modified epoxy resins in the powder coating composition may vary in relation to the amounts of the additives and reinforcing fiber. For example, per the phr (parts per hundred resin) formula convention, the epoxy resin, the elastomer-modified epoxy resin and the carboxyl functional polyester resin total is set at 100 parts. The percent of the total elastomer-modified epoxy resin in the formulation then varies as a function of additive and reinforcing fiber phr level. In some embodiments, the elastomer-modified epoxy resin or combination of elastomer-modified epoxy resins is present in an amount from about 5 to about 35 parts of the available 100 parts. Alternatively, in an embodiment, the elastomer-modified epoxy resin is present in the powder coating composition in an amount greater than about 1 wt%, more preferably greater than about 2 wt% and most preferably greater than about 3 wt%, and less than about 25 wt%, more preferably less than about 15 wt%, and most preferably less than about 10 wt%, based on total weight of the powder coating composition.

In some embodiments of the invention, the powder coating composition may also include an effective amount of a carboxy functional polyester resin with an acid number of about 25 to about 85 mg KOH/g or from about 45 to about 75 mg KOH/g for enhanced chip resistance.

The amount of the carboxy functional polyester resin or combination of carboxy functional polyester resins in the powder coating composition may vary in relation to the amounts of the additives and reinforcing fiber. For example, per the phr (parts per hundred resin) formula convention, the epoxy resin, the elastomer-modified epoxy resin and the carboxyl functional polyester resin total is set at 100 parts. The percent of the total carboxy functional polyester resin in the formulation then varies as a function of additives and reinforcing fiber phr level. In some embodiments, the carboxy functional polyester resin or combination of carboxy functional polyester resins is present in an amount from about 30 to about 85 parts of the available 100 parts.

The carboxyl-functional polyester resins can be prepared by any commonly known method, such as for example, condensation reactions between aliphatic di- or poly-hydric alcohols and cycloaliphatic, acyclic or aliphatic di- or poly-carboxylic acids or anhydrides thereof, or between aliphatic dihydric alcohols and aromatic di- or poly-carboxylic acids or anhydrides thereof. For non-limiting example, the carboxyl-functional polyester resins can be prepared from aliphatic di- or poly-hydric alcohols, particularly lower aliphatic diols such as, without limitation, ethylene glycol, 1,2-propane diol, 1,3-propane diol, 1,2-butanediol, 1,3-butanediol, 1,4-butanediol, 2,2-dimethyl propane-1,3-diol (i.e., neopentyl glycol), 1,6-hexanediol, 2,3-hexanediol, 2,5-hexanediol, diethylene glycol or dipropylene glycol. Polyols such as, trimethylolpropane can also be used to prepare the carboxyl-functional polyesters. Examples of suitable di- or poly-carboxylic acids and anhydrides include phthalic acid, isophthalic acid, terephthalic acid, malonic acid, succinic acid, glutaric acid, adipic acid, pimelic acid, suberic acid, azelaic acid, sebacic acid, dodecanedioic acid, tetrahydrophthalic acid, hexahydrophthalic acid, and maleic acid and anhydrides of such acids. In some embodiments, the carboxyl-functional polyester resin is an aromatic containing polyester, for example, a polyester prepared from aromatic carboxylic acid such as phthalic acid, isophthalic acid or terephthalic acid and a polyol such as neopentyl glycol.

The coating compositions of the present invention further include at least one adhesion promoter. Suitable adhesion promoters include adhesion promoters based on a modified copolymer adsorbed on SiO₂. Examples of such adhesion promoters are BYK®-LP X 21725 available from BYK Additives and Instruments (BYK-Chemie GmbH) and SHO SHI T70 available from Shanghai Zhongtian. In another embodiment, suitable adhesion promoters can be liquid silanes, such as DOW A187, available from The Dow Chemical Company. In an embodiment, the adhesion promoter or combination of adhesion promoters are present in an amount from about 0.1 wt% or more, preferably about 0.5 wt% or more, and more preferably about 1.0 wt% or more, to about 5.0 wt%, preferably about 3.0 wt% or less, more preferably, about 2.5 wt% or less, based on total weight of the composition.

In an embodiment, the powder coating compositions of the invention also include an effective amount of filler material. Suitable fillers include complex aluminosilicate (muscovite mica), calcium metasilicate (wollastonite), micronized magnesium silicate (talc), zinc oxide powder, zinc dust, quartz powder, aluminum silicates, calcium silicates, magnesium silicates, calcium carbonate, barium sulphate, calcium sulphate, aluminum oxide, glass flake, C modified composition glass flake, nepheline syenite filler and combinations thereof. In a preferred embodiment, the filler material is selected from calcium carbonate, nepheline syenite filler and combinations thereof.

Some embodiments of the invention include about a 2 to about 15 µm median particle size calcium metasilicate (wollastonite), and/or about a 0.5 to about 3.0 µm median particle size micronized magnesium silicate (talc). These fillers function to improve corrosion resistance through a combination of pH regulation and moisture absorption properties. Median particle sizes for the wollastonite and micronized talc have been established by laser diffractive technique and are used in some embodiments at about 10 to about 40 phr and about 1 to about 8 phr respectively.

In some embodiments, the filler material may further include platy filler material. Platy filler materials for use in the present invention include, for example, about a 10 to about 35 µm median particle size complex aluminosilicate (muscovite mica), about a 10 to about 35 um median particle size magnesium silicate (talc), about a 150 to about 200 um median particle size C modified composition glass flake, and combinations thereof. Theses fillers have platy particle geometry and tend to orient parallel to the primer coating layer which improves corrosion resistance through improved barrier properties. The median particle size for the muscovite mica, talc and glass flake has been established by sedigraph (sedimentation analysis) and is used in some embodiments from about 10 to about 50 phr (parts per hundred of resin), and in other embodiments from about 10 to about 40 phr.

In an optional embodiment, an effective amount of a foaming/blowing agent additive is present in the powder coating composition to establish a porous structure within the coating film. The porous structure imparts physical properties to the coating such as the ability to absorb impact energy without fracturing.

In some embodiments, the foaming and blowing agents are used at about 0.2 to about 2.0 phr (parts per hundred of resin). Foaming agents with p,p'-oxybis(benzenesulfonyl hydrazide) and activated azodicarbonamide based compositions are employed in some embodiments. Other foaming agents include p-toluenesulfonyl hydrazide based foaming agents, modified azodicarbonamide, p.p'-oxybis(benzenesulfonyl hydrazide), p-toluenesulfonyl hydrazide, benzenesulfonyl hydrazide, surface coated citric acid and sodium bicarbonate, urea derivatives, zinc-dibenzensulfinate, zinc ditoluenesulfinite and spherical beads (e.g., thermal expandable microsphere). An effective amount of a reinforcing fiber is also present in the powder coating composition to recover any loss of strength that can, for example, be caused by the optional presence of a foaming/blowing agent. For example, a range of aluminosilicate glass fibers or natural mined calcium metasilicate (wollastonite) fibers can be employed. An average diameter of about 3 to about 15 um and an average aspect ratio (within the context of coatings fillers, aspect ratio is defined as the ratio of a filler particle's largest dimension to its smallest) of about 5 to about 20 is employed in some embodiments. Other reinforcing fibers such as aramid and carbon could be used as well. Reinforcing fibers in the amount of about 20 to about 70 phr are employed in some embodiments of the invention. In some embodiments, the reinforcing fiber is the E-glass silane treated glass fibers with a diameter of 0.1 to 50 microns and a length of 5-1000 microns, commercially available from Fibertec. Other suitable glass reinforcing fibers are available from Well Development Company Limited, Glass Flake, Johns Manville, Chance & Hunt(glass powder), Bead Brite research (glass powder) and Owens Corning.

In an embodiment, glass reinforcing fibers may be present in an amount from greater than 15 wt% to about 50 wt%, more preferably from 20 wt% to about 40 wt%, and most preferably from about 25 wt% to about 30 wt%, based on total weight of the powder coating composition.

Glass reinforcing fibres are employed in an amount of 35 to 95 phr. If the amount of glass reinforcing fibres is below 35 phr the strengthening effect is too weak, if the amount of glass reinforcing fibres is above 95 phr various coating properties can be compromised, such as flexibility, sprayability, and corrosion protection.

The coating compositions of the present invention can also include additives, such as pigments, catalysts/curing agents, degassing agents, waxes, flow control agents and antioxidants.

Pigments for use in the powder coating compositions of the invention include, for example, titanium dioxide, iron oxide (yellow, brown, red, black), carbon black and organic pigments. These pigments can be added in conventional amounts known to those of ordinary skill in the art.

While the present invention is able to provide the requisite levels of corrosion and chip resistance, it is contemplated that the present invention may optionally include corrosion-inhibiting pigments to provide additional corrosion resistance. The corrosion-inhibiting pigments may be, for example, at least one of:
- simple molybdates such as zinc molybdate, strontium molybdate and complex molybdates such as calcium zinc molybdate, calcium zinc phosphomolybdate (eg., MOLYWHITE™ MZAP);
- simple chromates such as zinc chromate, barium chromate, strontium chromate, magnesium chromate, calcium chromate and complex chromates such as lead silico chromate, zinc tetraoxy chromate;
- metal phosphides such as iron phosphide (e.g. FERROPHOS™ iron phosphide, OCCIDENTAL CHEMICAL CORP., Dallas, TX);
- silicates such as zinc phosphosilicate and calcium borosilicate; and
- simple phosphates such as iron phosphate, zinc phosphate, zinc pyrophosphate, calcium hydrogen phosphate and complex phosphates such as zinc borate orthophosphate, strontium aluminum polyphosphate, zinc aluminum polyphosphate, zinc aluminum molybdenum orthophosphate, zinc aluminum orthophosphate.

In an embodiment, the powder composition may include from about 1 wt% to about 70 wt%, by weight based on powder composition weight, of a corrosion-inhibiting pigment. In another embodiment, the powder composition includes from about 1 wt% to about 50 wt%, of a corrosion-inhibiting pigment, preferably from about 1 to about 40%, and more preferably from about 1% to about 35%, based on the total weight of the powder coating composition.

The pigments may be present in their basic form, may be organic modified, and may be present as the hydrate. Other descriptions of suitable corrosion-inhibiting pigments appear in US Patent No. 3,884,705 and are summarized by G.B. Rothenberg in Paint Additives , Noyes Data Corp, 1978, pp175-177. US Patent No. 7,244,780 also discloses corrosion-inhibiting pigments that include "a source of stabilizing anions, advantageously phosphate ions, capable of dissolving in the presence of water".

Zinc phosphate herein is contemplated to include (a) Zinc phosphate di-or tetrahydrate, preferably in the form of spheroidal particles as described in U.S. Pat. No. 5,137,567 (an example of zinc phosphate dihydrate being the material available under the trade name DELAPHOS™ 2M and a further example of a zinc phosphate being the available under the trade name HISPAFOS™ SP, comprising spheric particles of narrow particle size distribution); (b) Spheroidal zinc phosphate as a crystalline phase in admixture with an amorphous phase comprising Fe(II) phosphate and Fe(III) phosphate. Further information concerning such materials may be found in U.S. Pat. No. 5,030,285; and (c) Zinc phosphate (preferably in spheroidal form) modified with zinc molybdate (such as ACTIROX™106; Microfine Minerals Ltd.).

In an embodiment, the powder coating composition may also include catalyst/curing agent additives such as for example, quaternary ammonium salts, quaternary phosphonium salts, phosphines, imidazoles metal salts, and combinations thereof. Examples of such additives include tetrabutylammonium chloride, tetrabutylammonium bromide or tetrabutylammonium iodide, ethyltriphenyl phosphonium acetate, triphenylphosphine, 2-methyl imidazole, dibutyltin dilaurate, dicyandiamide, and combinations thereof. The catalyst/curing agent, when used in some embodiments, is present in the composition in amounts of between about 0 and about 5 weight percent, and alternatively from about 0.2 to about 2 percent by weight based on total weight of the coating composition.

The powder coating composition may further include an effective amount of a curing or crosslinking agent in some embodiments of the invention, such as a polyhydroxyl compound or a cure catalyst to effect auto-cross-linking of the epoxy resin. For example, the epoxy resin is cured with a polyhydroxyl functionality having a relatively high hydroxy equivalent weight, i.e., at least about 180 up to about 800, in another embodiment preferably 200 up to about 600 and more preferably at least about 300. The relatively high hydroxy equivalent weight of the cross-linking agent ensures relatively long chain length between OH groups, which chain lengths provide flexibility to the cured coating, helping to render the coatings chip-resistant. Suitable curing agents useful in the practice of this invention are exemplified by phenolic curing agents, such as a bisphenol A end capped diglycidyl ether of bisphenol A, which is the reaction product of a diglycidyl ether of bisphenol A and bisphenol A and polyester resins with free carboxylic acid groups that are known to form "Hybrid" powder coatings. Examples of preferred phenolic curing agents for the epoxy resin component include those sold under the trademarks D. E.H.™87 and D.E.H.™85 (Dow Chemical Co.), both of which are believed to be bisphenol A end capped diglycidyl ethers of bisphenol A. Other classes of phenolic hardeners can be used as well such as phenol-and cresol-novolac curing agents sold by Dow Chemical Co. Hexion Specialty Chemicals.

Other epoxy crosslinking agents include, for example:
- amines, including multifunctional aliphatic or aromatic primary or secondary amines, such as dicyandiamide, diaminodiphenyl sulfone;
- tertiary amines which promote self cross-linking such as DMP 30 (Dow Chemical Co.).;
- boron trihalides and salts thereof such as the monoethanolamine salt of boron trifluoride.;
- Organic acid salts such as VESTAGON™B55 and VESTAGON™B68 (Degussa Corp.).;
- di and poly anhydrides such as benzophenonetetracarboxylic dianhydride (BTDA);
- di and poly phenols such as methylene disalicylic acid; and,
- imidazoles, substituted imidazoles and epoxy imidazole adducts such as 2- methyl imidazole or DEH 40 (Dow Chemical Co.).

In some embodiments, the polyhydroxyl functional phenolic curing agent has a hydroxyl equivalent weight (HEW) of from about 180 to about 800, and in another embodiment preferably from about 200 to about 600. The polyhydroxyl functional phenolic curing agent may be formed from bisphenol A termination of low molecular weight diglycidyl ethers of bisphenol A. In some embodiments, the curing agent is a phenolic curing agent having a HEW of about 230 to about 260 and contains a 2-methylimidazole cure accelerator. In a preferred embodiment, the phenolic curing agent has a HEW of about 300 to about 500, an example of which is a phenolic curing agent from The Kukdo Chemical Company as EPOKUKDO KD-426 which has a HEW from about 360 to about 440. Another suitable phenolic curing agent may also include Dow DEH 84, available from the Dow Chemical Company.

The amount of the curing agent or combination of curing agents may vary in relation to the amounts of the additives and the reinforcing fiber. For example, per the phr (parts per hundred resin) formula convention, the elastomer-modified epoxy resin and the carboxyl functional polyester resin total is set at 100 parts. The percent of the total curing agent in the formulation then varies as a function of additives and reinforcing fiber phr level. In some embodiments, the curing agent or combination of curing agents is present in an amount from about 5 to about 65 parts of the available 100 parts. Alternatively, in an embodiment, the curing agent or combination of curing agents are present in an amount from about 1 wt% to about 30 wt%, more preferably from about 5 wt% to about 25 wt%, and most preferably about 8 wt% to about 20 wt%, based on total weight of the powder coating composition.

A degassing agent can be added to the composition to allow any volatile material present to escape from the film during baking. Benzoin is a degassing agent and when used in some embodiments can be present in amounts from about 0.1 to about 1.0 percent by weight based on total weight of a powder coating composition, and in another embodiment from about 0.2 to about 0.5 percent by weight.

The one or more waxes in the powder coating composition may be any wax giving a slip test tangent value of 0.335 or lower (ASTM D 4518-85 (1985). Suitable waxes may be chosen from polyethylene (PE) wax, microcrystalline PE wax, high molecular weight PE wax, polytetrafluoroethylene (PTFE) waxes, hydrogenated castor oil, PTFE combinations with TiO₂, partially chlorinated Paraffin resins, e.g. 70% chlorinated paraffin resins, PE/PTFE combinations, waxes containing organosiloxanes, and mixtures thereof. Preferably, the wax comprises a PE/PTFE combination, or, more preferably a PE/PTFE combination wherein the ration of PE to PTFE is 1:1 to 3.0:1.0, for example, from 1.1:0.9 to 2.0:1.0. The one or more wax may be used in amounts of from 0.1 or more phr, to 5.0 phr, preferably 3.0 phr or less, more preferably, 2.5 phr or less. Alternatively, the wax or combination of waxes are present in an amount from 0.1 wt% or more or 0.5 wt% or more, to 5.0 wt%, preferably 3.0 wt% or less, more preferably, 2.5 wt% or less, based on total weight of the composition.

Flow control agents include lower molecular weight acrylic polymers, for example, acrylic polymers, such as acrylic polymers having a number average molecular weight from about 1000 to about 50,000, such as, without limitation, polylauryl acrylate, polybutyl acrylate, poly(2-ethylhexyl)acrylate, poly(ethylacrylate-2-ethylhexylacrylate), polylauryl methacrylate and polyisodecyl methacrylate, and fluorinated polymers such as the esters of polyethylene glycol or polypropylene glycol and fluorinated fatty acids. Polymeric siloxanes of molecular weights over about 1,000 may also be used as a flow control agent, for non-limiting example, poly(dimethylsiloxane) or poly(methylphenyl) siloxane. Flow control agents can aid in the reduction of surface tension during heating of the coating powder and in elimination of crater formation. In some embodiments, the flow control agent when used is present in amounts of from about 0.05 to about 5.0 percent by weight based on the total weight of a powder coating composition, more preferably from about 0.1 percent by weight to about 2 percent by weight.

Antioxidants include phenolic, phosphite, phosphonite and lactone-type antioxidants, as well as combinations thereof. In some embodiments, the antioxidants are present in an amount of from about 0 to about 3 wt%, more preferably from about 0.1 wt% to about 3 wt%, based on total weight of the powder coating composition.

While the present invention is able to provide the requisite levels of corrosion and chip resistance required with the use of high levels of zinc present in the coating composition, it is contemplated that the present invention may optionally include zinc. In an embodiment, the powder coating composition optionally includes from about 1 wt% to about to 65 wt%, more preferably from about 1 wt% to about 49 wt%, based on powder coating composition weight, zinc; typically the zinc is in powder or flake form. Preferably the powder coating composition includes a minimal amount of zinc (i.e. less than 15 wt%); more preferably the powder coating composition is free from zinc.

The coating compositions of the present invention are especially suitable for application to metals, such as automotive springs. However,

it is also possible to apply the coating compositions to carbon, wood, glass, polymers and other substrates.

Powder compositions used to provide the chip-resistant and corrosion-resistant coatings of the present invention are produced in the usual manner. The components are blended, and then are melt-compounded with heating above the melting point of the resin for a short time, e.g., 30 to 90 sec., so that no significant curing occurs. The molten compound is extruded, and after extrusion, the composition is rapidly cooled. The composition is then ground and, as necessary, the particulates sorted according to size. For electrostatic coating, the particles are generally in the 5 to 100 micron size range with a major portion generally being in the 20 to 50 micron size range. Larger particulates are useful for fluidized bed coating operations.

In the method for coating a substrate of the present invention the powder composition of the present invention is applied to the substrate and heated to fuse and cure the applied composition. In one embodiment the substrate is a metal substrate, typically a steel substrate, wherein the powder composition may be may be used, for example, as a pipe coating, rebar coating, or a coating for agricultural or construction equipment. In another embodiment the substrate is a high tensile steel substrate such as is suitable for use, for example, in coil springs in the transportation industry. Herein, high tensile steel is defined as having MPa (megapascal, N/m²) ranging from 1800 Mpa to 2100 Mpa or above; this includes super high tensile steel from 1950 MPa to 2100 MPa or above. Steel substrates herein are contemplated to include pretreated steel substrates, including treatments of, for example, zinc phosphate, iron phosphate, and dry in place pretreatment technology. The powder composition is typically heated at a temperature of greater than 149°C (300°F) for a time sufficient to fuse and substantially cure the coating such as, for example, by placing into an electric air circulating oven maintained at 160°C (320°F) for 20 minutes for a cured film thickness over 50 microns.

In some embodiments, application of the above described powder coating compositions to high tensile steel can be accomplished by any known techniques, such as the following Methods 1 and 2. Regardless of the application technique used, the powder coating composition formed on the high tensile steel alloy may contain a discrete coating, for example from about 80 to about 1000 microns thick, in contact with the pretreated steel surface.

### Application Techniques

**Method 1** -The steel is heated to about 104°C to about 194°C for more ideal deposition followed by application of the powder coating composition. The coated steel is then heated again to create a cured coating layer and achieve full property development of the coating.

**Method 2** - The powder coating composition is applied to ambient temperature high tensile steel followed by a single heat cycle of about 140°C to about 195°C to create the coating layer and achieve full property development of the coating.

The introduction of cellular foam structures is the organic portion of the protective system. For example, the steel cleaning and "pretreatment" or passivation step may introduce and or include foam forming components which generate a cellular structure within the pretreatment layer or the organic layer above it as evolved gases percolate through the film during heating. Examples of such gas generators are azo compounds, which are well known in the industry. Such foam may also be produced by simple decomposition or dehydration of the pretreatment chemicals themselves. Zinc phosphate (hopeite and/or phosphyllite), for example, having been deposited on cold rolled steel panels, has been shown to foam by heating to approximately 200°C.

The present invention will now be illustrated by the following examples. The examples are intended to exemplify the present invention. The breadth and scope of the invention are to be limited solely by the claims appended hereto.

### EXAMPLES

The powder coating composition was formed from the ingredients listed in the Table 1 according to a method wherein the raw ingredients were blended by shaking them in a plastic bag for about 1 min, then extruded for a short time (60-90sec) in a Prism Twin Screw TSE 24PC extruder set at 71.1 °C (160°F) into sheets, which were air cooled on a belt and broken into chips. The resulting chips were mixed for about 1 minute in a plastic bag with dry flow aid in the amount indicated and then ground at high speed in a Brinkman Retsch ZM 1000 Laboratory Grinder to a powder, and then screened using an 135 µm (100 mesh) screen to remove coarse particles.

### EXAMPLE 1 - Content of powder compositions

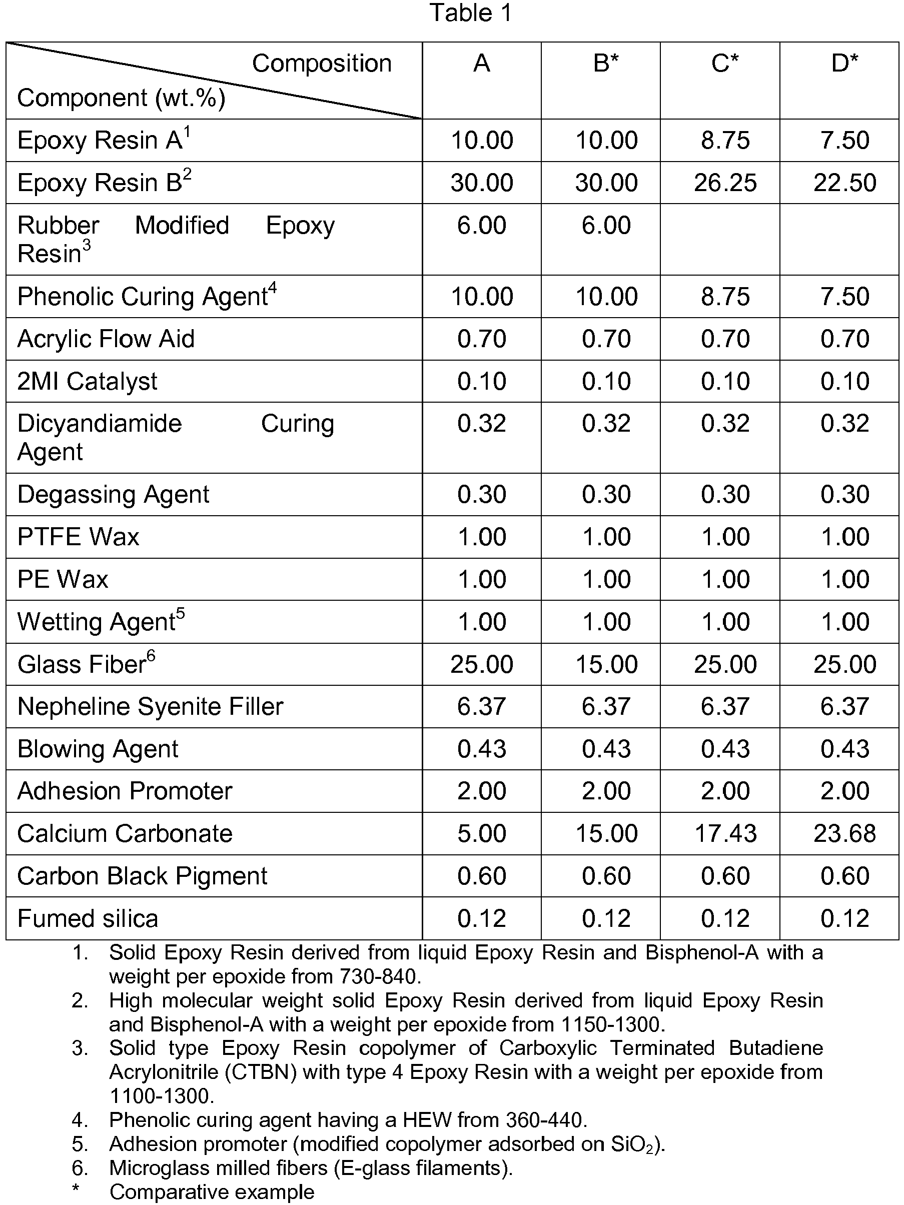

### EXAMPLE 2 - Evaluation of Single Coat Powder Coated Coil Springs

Tests were performed to evaluate the performance of the inventive single coat system compared to other comparative systems. The tests were conducted using the standard industry-accepted test methods as identified in Tables 2 and 3. In table 4 the results of the various tests are presented:

**Table 2**

| | |
|---|---|
| The Test Procedure: | GM9984164 specification for dual coat springs. |
| Substrates Tested: | Panels formed to simulate suspension springs: CR |
| | Coil springs: (Type IV) high tensile steel |
| Substrate Preparation (for both Panels and Springs) | Pretreatment: Shot blaster (meet Sa½ or Sa 3 regarding to ISO 8501-1, with S330 and S170 ball) + Zinc phosphate |
| | Curing condition : 160°C at 20 min(metal temperature) |
| | Film thickness : 500∼700µm |

**Table 3**

| **Item** | **GM Specification** |
|---|---|
| Corrosion (Salt Spray Test 1000 h) | GM4298P |
| Chipping test (at -18°C Chipping test + SST 24 h) | GM9508P |
| *Scab corrosion Chipping test + Scab corrosion 5 cycle | GM9511P |
| Cyclic corrosion, 10 cycle J | GM9505P |

| | |
|---|---|
| *In case of coil spring application, Scab corrosion test should be conducted after finishing chipping test | |

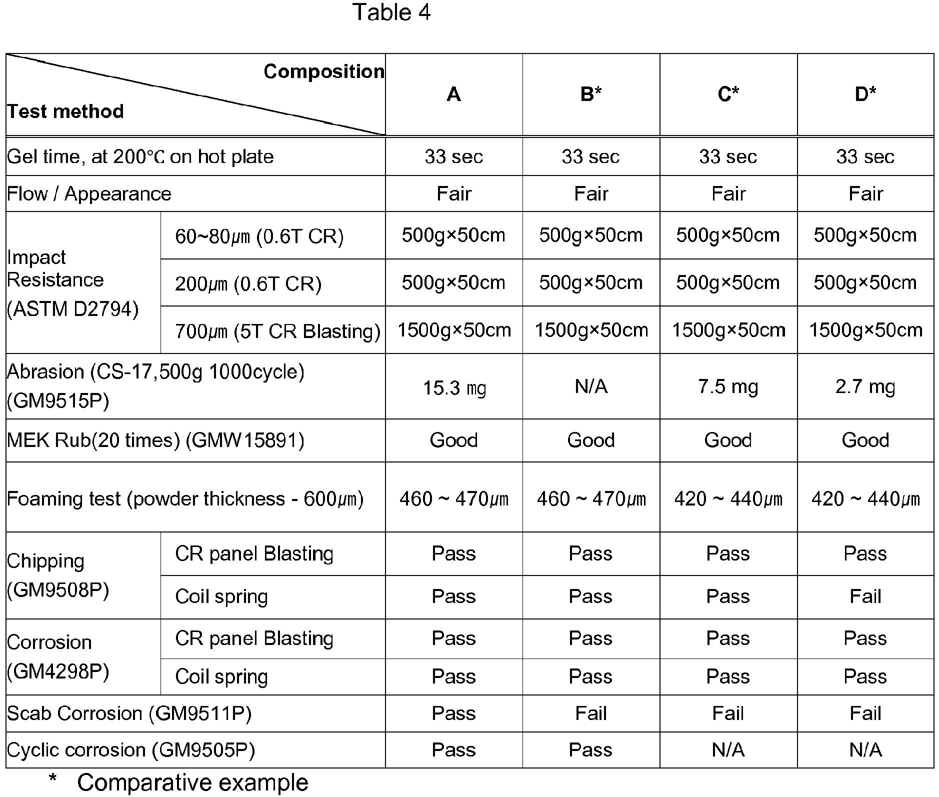

As shown in Table 4, the Comparative Zinc-Free Single Coating Epoxy compositions, while passing many of the evaluation performance tests, it did not pass the Scab Corrosion test. Consequently, the coating was not deemed to provide acceptable corrosion resistance necessary for the intended application.

### EXAMPLE 3 - Evaluation of Single Coat vs. Dual Coat Coating Powder Coated Coil Springs

Tests were performed to evaluate the performance of the inventive single coat system compared to a conventional dual coat coating powder system on coil springs. The tests were conducted using the standard industry-accepted test methods as identified in Tables 5 and 6:

**Table 5**

| | |
|---|---|
| The Test Procedure: | GM9984164 specification for dual coat springs. |
| Substrates Tested: | Coil springs |

**Table 6**

| | | **Zinc-Free Single Coating Epoxy composition A** | **Conventional Zinc-Free Dual Coating¹** |
|---|---|---|---|
| Gel time | | 33 sec | 37 sec |
| Flow | | Fair | Fair |
| Impact Resistance (ASTM D2794) | 60∼80*µ*m (0.6T CR) | 500g×50cm | 500g×50cm |
| | 200*µ*m (0.6T CR) | 500g×50cm | 500g×50cm |
| | 700*µ*m (5T CR Blasting) | 1500g×50cm | 1500g×50cm |
| Abrasion (CS-17,500g 1000cycle) (GM9515P) | | 15.3 mg | 15.9 mg |
| MEK Rub(20 times) (GMW15891) | | Good | Good |
| Foaming test (powder thickness - 600*µ*m) | | 460 ∼ 470*µ*m | 360 ∼ 370*µ*m |
| Chipping (GM9508P) | CR panel Blasting | Pass | Pass |
| | Coil spring | Pass | Pass |
| Corrosion (GM4298P) | CR panel Blasting | Pass | Pass |
| | Coil spring | Pass | Pass |
| Scab Corrosion (GM9511 P) | | Pass | Pass |
| Cyclic corrosion (GM9505P) | | Pass(Blister 4 ∼ 6mm) | Pass(Blister 4 ∼ 5mm) |

| | | | |
|---|---|---|---|
| 1. Primer is BL100K and topcoat is BN105K each available from Akzo Nobel Powder Coatings. | | | |

As shown, the inventive single coating system performed as well as the conventional dual coat system in all categories.

## Claims

1. A corrosion and chip resistant powder coating composition comprising:
- from 40 to 75 wt%, based on total weight of the composition, of one or more epoxy resins, wherein the one or more epoxy resins has an EEW from 700 to 1500;
- greater than 15 wt%, based on total weight of the composition, of at least one reinforcing fiber, wherein the at least one reinforcing fiber is a glass fiber and wherein the amount of glass fiber is between 35 and 95 phr; and
- from 0.1 wt% to 5 wt%, based on total weight of the composition, of at least one adhesion promoter.

2. The composition of claim 1 wherein the one or more epoxy resins has an EEW from 730-840.

3. The composition of claim 1 wherein the one or more epoxy resins has an EEW from 1150 to 1300.

4. The composition of claim 1 wherein the one or more epoxy resins is an epoxy/CTBN rubber adduct having an EEW from 1000 to 1300.

5. The composition of claim 1 wherein the one or more epoxy resins comprises a first epoxy resin having an EEW from 730-840 and a second epoxy resin having an EEW from 1150 to 1300.

6. The composition of claim 5 wherein the one or more epoxy resins further comprises an epoxy/CTBN rubber adduct having an EEW from 1000 to 1300.

7. The composition of claim 1 wherein the at least one adhesion promoter is a modified copolymer adsorbed on SiO₂.

8. The composition of claim 1 further comprising at least one filler wherein the at least one filler is selected from the group consisting of calcium carbonate, nepheline syenite filler and combinations thereof.

9. The composition of claim 8 wherein the at least one filler carbonate is present in an amount from 1 wt% to 10 wt%, based on total weight of the composition.

10. The composition of claim 1 further comprising at least one phenolic curing agent.

11. The composition of claim 1 further comprising one or more waxes.

12. A method for coating a steel substrate comprising:
- applying a single coat powder coating system comprising a corrosion and chip resistant powder coating composition comprising from 40 to 75 wt%, based on total weight of the composition, of at least one epoxy resin, wherein the at least one epoxy resin has an EEW from 700 to 1500, greater than 15 wt%, based on total weight of the composition, of at least one reinforcing fiber, wherein the at least one reinforcing fiber is a glass fiber, and wherein the amount of glass fiber is between 35 and 95 phr, and from 0.1 wt% to 5 wt%, based on total weight of the composition, of at least one at least one adhesion promoter; and
- heating the powder coating composition to an effective temperature and an effective time sufficient to fuse the composition.

13. A steel substrate coated with a single layer powder coating system, wherein said single layer powder coating system comprises a corrosion and chip resistant powder coating composition comprising:
- from 40 to 75 wt%, based on total weight of the composition, of at least one epoxy resin, wherein the at least one epoxy resin has an EEW from 700 to 1300;
- greater than 15 wt%, based on total weight of the composition, of at least one reinforcing fiber, wherein the at least one reinforcing fiber is a glass fiber and wherein the amount of glass fiber is between 35 and 95 phr;
- from 0.1 wt% to 5 wt%, based on total weight of the composition, of at least one adhesion promoter.

## Patentansprüche

1. Korrosions- und zerspanungsbeständige Pulverbeschichtungszusammensetzung, mit:
- 40 bis 75 Gew-%, bezogen auf das Gesamtgewicht der Zusammensetzung, eines oder mehrerer Epoxidharze, wobei das eine oder die mehreren Epoxidharze einen EEW von 700 bis 1500 aufweist/aufweisen;
- mehr als 15 Gew-%, bezogen auf das Gesamtgewicht der Zusammensetzung, von mindestens einer Verstärkungsfaser, wobei die mindestens eine Verstärkungsfaser eine Glasfaser ist und wobei die Menge an Glasfaser zwischen 35 und 95 phr liegt; und
- 0,1 Gew-% bis 5 Gew-%, bezogen auf das Gesamtgewicht der Zusammensetzung, von mindestens einem Haftvermittler.

2. Zusammensetzung nach Anspruch 1, wobei das eine oder die mehreren Epoxidharze einen EEW von 730 bis 840 aufweist/aufweisen.

3. Zusammensetzung nach Anspruch 1, wobei das eine oder die mehreren Epoxidharze einen EEW von 1150 bis 1300 aufweist/aufweisen.

4. Zusammensetzung nach Anspruch 1, wobei das eine oder die mehreren Epoxidharze aus einem Epoxid/CTBN-Kautschukaddukt mit einem EEW von 1000 bis 1300 besteht/bestehen.

5. Zusammensetzung nach Anspruch 1, wobei das eine oder die mehreren Epoxidharze ein erstes Epoxidharz mit einem EEW von 730 bis 840 und ein zweites Epoxidharz mit einem EEW von 1150 bis 1300 umfasst/umfassen.

6. Zusammensetzung nach Anspruch 5, wobei das eine oder die mehreren Epoxidharze weiterhin ein Epoxid/CTBN-Kautschukaddukt mit einem EEW von 1000 bis 1300 umfasst/umfassen.

7. Zusammensetzung nach Anspruch 1, wobei der mindestens eine Haftvermittler aus einem modifizierten, an SiO₂ adsorbierten Copolymer besteht.

8. Zusammensetzung nach Anspruch 1, weiterhin mit mindestens einem Füllstoff, wobei der mindestens eine Füllstoff aus der Gruppe bestehend aus Calciumcarbonat, Nephelin-Syenit-Füllstoff sowie Kombinationen aus diesen ausgewählt ist.

9. Zusammensetzung nach Anspruch 8, wobei das mindestens eine Füllstoffcarbonat in einer Menge von 1 Gew-% bis 10 Gew-%, bezogen auf das Gesamtgewicht der Zusammensetzung, vorliegt.

10. Zusammensetzung nach Anspruch 1, weiterhin mit mindestens einem Phenolhärtungsmittel.

11. Zusammensetzung nach Anspruch 1, weiterhin mit einem oder mehreren Wachsen.

12. Verfahren zur Beschichtung eines Stahlsubstrates, mit den Schritten:
- Aufbringen eines Einschicht-Pulverbeschichtungssystems mit einer korrosions- und zerspanungsbeständigen Pulverbeschichtungszusammensetzung mit 40 bis 75 Gew-%, bezogen auf das Gesamtgewicht der Zusammensetzung, von mindestens einem Epoxidharz, wobei das mindestens eine Epoxidharz einen EEW von 700 bis 1500 aufweist, mehr als 15 Gew-%, bezogen auf das Gesamtgewicht der Zusammensetzung, von mindestens einer Verstärkungsfaser, wobei die mindestens eine Verstärkungsfaser eine Glasfaser ist und wobei die Menge an Glasfaser zwischen 35 und 95 phr liegt, und 0,1 Gew-% bis 5 Gew-%, bezogen auf das Gesamtgewicht der Zusammensetzung, von mindestens einem Haftvermittler; und
- Erhitzen der Pulverbeschichtungszusammensetzung auf eine wirksame Temperatur und eine wirksame Zeit, die zum Schmelzen der Zusammensetzung ausreichend ist.

13. Stahlsubstrat, das mit einem Einschicht-Pulverbeschichtungssystem beschichtet ist, wobei das Einschicht-Pulverbeschichtungssystem eine korrosions- und zerspanungsbeständige Pulverbeschichtungszusammensetzung umfasst, mit:
- 40 bis 75 Gew-%, bezogen auf das Gesamtgewicht der Zusammensetzung, eines oder mehrerer Epoxidharze, wobei das eine oder die mehreren Epoxidharze einen EEW von 700 bis 1300 aufweist/aufweisen;
- mehr als 15 Gew-%, bezogen auf das Gesamtgewicht der Zusammensetzung, von mindestens einer Verstärkungsfaser, wobei die mindestens eine Verstärkungsfaser eine Glasfaser ist und wobei die Menge an Glasfaser zwischen 35 und 95 phr liegt; und
- 0,1 Gew-% bis 5 Gew-%, bezogen auf das Gesamtgewicht der Zusammensetzung, von mindestens einem Haftvermittler.

## Revendications

1. Composition de revêtement en poudre résistant à la corrosion et à l'écaillage comprenant :
- 40 à 75% en poids, par rapport au poids total de la composition, d'une ou de plusieurs résine(s) époxy, où la ou les résine(s) époxy a/ont un poids équivalent d'époxy, dit EEW, allant de 700 à 1500 ;
- plus de 15% en poids, par rapport au poids total de la composition, d'au moins une fibre de renforcement, où l'au moins une fibre de renforcement est une fibre de verre et où la quantité de fibre de verre est comprise entre 35 et 95 phr ; et
- 0,1% en poids à 5% en poids, par rapport au poids total de la composition, d'au moins un promoteur d'adhérence.

2. Composition de la revendication 1, dans laquelle la ou les résine(s) époxy a/ont un EEW allant de 730 à 840.

3. Composition de la revendication 1, dans laquelle la ou les résine(s) époxy a/ont un EEW allant de 1150 à 1300.

4. Composition de la revendication 1, dans laquelle la ou les résine(s) époxy est/sont un adduit d'époxy/caoutchouc CTBN ayant un EEW allant de 1000 à 1300.

5. Composition de la revendication 1, dans laquelle la ou les résine(s) époxy comprend/comprennent une première résine époxy ayant un EEW allant de 730 à 840 et une deuxième résine époxy ayant un EEW allant de 1150 à 1300.

6. Composition de la revendication 5, dans laquelle la ou les résine(s) époxy comprend/comprennent en outre un adduit d'époxy/caoutchouc CTBN ayant un EEW allant de 1000 à 1300.

7. Composition de la revendication 1, dans laquelle l'au moins un promoteur d'adhérence est un copolymère modifié adsorbé sur SiO₂.

8. Composition de la revendication 1, comprenant en outre au moins une charge, dans laquelle l'au moins une charge est choisie dans le groupe constitué par le carbonate de calcium, une charge syénite néphélinique et des combinaisons de ceux-ci.

9. Composition de la revendication 8, dans laquelle l'au moins une charge carbonate est présente en une quantité allant de 1 % en poids à 10% en poids, par rapport au poids total de la composition.

10. Composition de la revendication 1, comprenant en outre au moins un agent de durcissement phénolique.

11. Composition de la revendication 1, comprenant en outre une ou plusieurs cire(s).

12. Procédé de revêtement d'un substrat en acier comprenant le fait :
- d'appliquer un système de revêtement en poudre en une seule couche comprenant une composition de revêtement en poudre résistant à la corrosion et à l'écaillage comprenant 40 à 75% en poids, par rapport au poids total de la composition, d'au moins une résine époxy, où l'au moins une résine époxy a un EEW allant de 700 à 1500, plus de 15% en poids, par rapport au poids total de la composition, d'au moins une fibre de renforcement, où l'au moins une fibre de renforcement est une fibre de verre et où la quantité de fibre de verre est comprise entre 35 et 95 phr, et 0,1% en poids à 5% en poids, par rapport au poids total de la composition, d'au moins un promoteur d'adhérence ; et
- de chauffer la composition de revêtement en poudre à une température efficace et un temps efficace suffisant pour assurer la fusion de la composition.

13. Substrat en acier revêtu d'un système de revêtement en poudre en une seule couche, dans lequel ledit système de revêtement en poudre en une seule couche comprend une composition de revêtement en poudre résistant à la corrosion et à l'écaillage comprenant :
- 40 à 75% en poids, par rapport au poids total de la composition, d'au moins une résine époxy, où l'au moins une résine époxy a un EEW allant de 700 à 1300 ;
- plus de 15% en poids, par rapport au poids total de la composition, d'au moins une fibre de renforcement, où l'au moins une fibre de renforcement est une fibre de verre et où la quantité de fibre de verre est comprise entre 35 et 95 phr;
- 0,1% en poids à 5% en poids, par rapport au poids total de la composition, d'au moins un promoteur d'adhérence.
